(19) 

**Europäisches Patentamt**

**European Patent Office**

**Office européen des brevets**

(11) **EP 4 745 849 A1**

(12) **EUROPEAN PATENT APPLICATION**

(43) Date of publication:
20.05.2026 Bulletin 2026/21

(21) Application number: 24306901.0

(22) Date of filing: 14.11.2024

(51) International Patent Classification (IPC):
*G06N 20/00* (2019.01) *G05B 23/02* (2006.01)

(52) Cooperative Patent Classification (CPC):
**G06N 20/00; G05B 23/024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Schneider Toshiba Inverter Europe SAS**
**27120 Pacy-sur-Eure (FR)**

(72) Inventors:
• **DUTREY, Alain**
**27120 FONTAINE SOUS JOUY (FR)**
• **HENWOOD, Nicolas**
**78955 CARRIERES SOUS POISSY (FR)**

(74) Representative: **Plasseraud IP**
**104 Rue de Richelieu**
**CS92104**
**75080 Paris Cedex 02 (FR)**

(54) **METHOD FOR COMPUTING A CONFIDENCE INDEX OF A PREDICTION MADE BY A MACHINE LEARNING MODEL**

(57) The present document proposes a method for calculating a confidence index for predictions made by a machine learning model that forecasts the state of a physical system containing an electrical machine. The method involves assessing model performance on a test dataset, observing system state variables, and creating a global performance map by clustering the dataset based on state similarities. Each cluster is characterized by a center vector, mean limit (ML), and conservative limit (CL), which are stored. In real-time, the state variables of the system are measured and matched to the nearest cluster in the performance map. The confidence index is then determined based on the comparison, reflecting the model's reliability relative to predefined performance limits (ML and CL) for the identified cluster.

Fig. 2

**Description**

**Technical Field**

The present disclosure relates to a method for computing a confidence index of a prediction made by a machine learning model able to predict a state of a physical system comprising an electrical machine, based on at least one input feature deriving from at least one sensor signal.

**Prior art**

Machine learning-based prediction systems are increasingly used to control and optimize complex physical systems, particularly in the field of electrical machines. These systems, such as electric motors, rely on a multitude of physical variables (such as currents, voltages, speed, and torque) that must be measured and analyzed in real time to enable automatic and accurate decision-making.

However, one of the major challenges these systems face is the ability of machine learning models to provide reliable predictions based on the available data. In particular, machine learning models depend on training datasets that cover a limited set of representative cases. Although these datasets are designed to include a wide range of operational scenarios, they cannot account for every possible case that the model may encounter in real-world conditions.

This limitation presents a significant challenge. When a machine learning model is required to make predictions in contexts that differ from its training set, ensuring the accuracy of its results becomes extremely difficult. Similarly, when the model is required to extrapolate beyond the range of data it has been trained on, it will produce results, but the relevance of those results cannot be guaranteed. This can lead to erroneous behaviors or incorrect decisions in systems where precision is critical, such as in the control of electric motors.

There is thus a need to propose a method for calculating a confidence index in real-time, based on predictions made by a machine learning model applied to a physical system, such as an electric motor. This confidence index should assess the reliability of the model's predictions based on the available data and their alignment with the model's training scenarios.

**Summary**

To this aim, the present document proposes a method for computing a confidence index of a prediction made by a machine learning model able to predict a state of a physical system comprising an electrical machine, the method comprising the following steps:

(a) optionally, training said machine learning model using supervised learning on a training dataset;
(b) estimating the performance of the machine learning model on a test dataset and associating each data point in the test dataset with a performance value;
(c) observing and/or measuring system state variables for each data point in the test dataset to capture corresponding state variables;
(d) creating a global performance map based on the state variables and the performance values of the machine learning model, by
(d2) clustering in state space the data points of the test dataset, wherein the clustering is based on the similarity of the state vectors obtained from the observed or measured state variables; and for each cluster,

   (d4) identifying a center vector for each cluster, wherein the center vector represents the average state of the data within the cluster or the closest data point of said cluster;
   (d7) calculating a mean limit (ML) for each cluster,
   (d8) calculating a conservative limit (CL) for each cluster,
   (d9) storing the cluster information including the center vector, the mean limit, and the conservative limit in the global performance map;

(e) optionally, detecting a steady state of the physical system before performing real-time observations, wherein the steady state is detected by monitoring the state variables over a predefined time window and ensuring that variations in the state variables remain within a predefined tolerance range; and, while said steady state is active,
(f) observing and/or measuring the state variables of the physical system in real-time;
(g) comparing the observed real-time state variables to the global performance map to find the nearest cluster in state space that corresponds to the real-time state; and
(h) calculating a confidence index based on the comparison between the observed real-time state and the stored cluster information, wherein the confidence index indicates whether the machine learning model is operating within predefined performance thresholds associated with the ML and CL limits for the respective cluster.

Each of the aforementioned steps is elaborated in greater detail in the sections that follow, providing a comprehensive explanation of the process and its implementation.

Training the machine learning model (step a): In this first optional step, the machine learning model may be trained using supervised learning. In this case, the model is fed with a training dataset that contains labeled data (e.g., input features and corresponding output labels). The objective is for the model to learn the relationships between inputs and outputs, so it can later make predictions on new, unseen data.

The term "prediction" encompasses various applications, including estimation, identification, and analysis of both present and past states. In the context of machine learning, "prediction" refers to the model's ability to infer or determine outcomes based on input data, regardless of whether these outcomes pertain to future events, current states, or historical analysis.

Estimating the performance of the machine learning model (step b): After the training phase, the machine learning model's performance is evaluated on a test dataset. This test dataset contains data that the model has not seen before during training. For each data point in the test set, a performance value is assigned based on how well the model performs (e.g., prediction accuracy, error rate, or other metrics relevant to the task).

Observing and/or measuring system state variables (step c): For each test data point, the system's state variables (such as current, voltage, speed, etc., in the case of an electrical machine) are measured or observed. These variables represent the state of the physical system at the moment of prediction and are captured alongside the data points. Measuring typically involves using sensors or instruments to directly quantify physical quantities. For example, in an electrical machine, this might involve measuring current or voltage using ammeters or voltmeters, where the exact values of these quantities are captured numerically at the moment of measurement. Observing, on the other hand, refers to using model-based estimation techniques or indirect methods to infer the state variables. Instead of directly measuring a variable, an observer algorithm (like a state observer in control theory) processes the available input and output data to estimate state variables that may not be directly measurable. For example, rotor flux in an electrical machine might not be directly measurable with sensors but can be estimated through a mathematical model based on measured currents and voltages.

Creating a global performance map (step d): A global performance map is created by combining the state variables and performance values. A global performance map is a reference that links the performance of a machine learning model to specific state variables of a physical system, such as an electrical machine. It serves as a detailed mapping that associates various operating conditions of the system (defined by the state variables) with the performance levels of the machine learning model. Such map provides a structured way to evaluate the machine learning model's reliability across different system states.

Said step of creating a global performance map includes the following sub-step.

Clustering the data points in state space (step d2): The data points from the test dataset are clustered in the state space based on the proximity of their corresponding state vectors. Clustering groups similar data points together, allowing for more structured analysis of the system's behavior under different conditions.

Said clustering step may be achieved using various algorithms, such as K-Means, Hierarchical Clustering, DBSCAN, and Gaussian Mixture Models. The specific choice of algorithm is not critical, as long as the data points within a cluster are sufficiently close to one another, using metrics like Euclidean distance.

Identifying a center vector for each cluster (step d4): For each cluster, a center vector is calculated. This vector represents the average state of all the data points within the cluster or the closest data point within the cluster. It serves as a reference for evaluating future real-time data.

Calculating a mean limit (ML) for each cluster (step d7): A Mean Limit (ML) is calculated for each cluster. The ML represents the maximum distance from the cluster's center where the machine learning model's performance is, on average, above a defined threshold. This limit defines the boundaries where the model can be trusted to perform reliably.

Calculating a conservative limit (CL) for each cluster (step d8): A Conservative Limit (CL) is calculated for each cluster, representing a stricter boundary within which the machine learning model operates with high confidence. The CL is typically smaller than the ML and is used to define the zone where the model's predictions are very reliable.

Storing the cluster information in the global performance map (step d9): The center vector, ML, and CL for each cluster are stored in a global performance map. As mentioned previously, this map serves as a reference during the system's operation to evaluate the reliability of the model's predictions in real-time.

Detecting a steady state of the physical system (step e): If data used for model training are taken in steady state condition, then the data that is preferably used to compute the confidence index should be in steady state. This means that the state variables should not vary significantly over a predefined time window. By monitoring these variables and ensuring that they remain within a predefined tolerance range, it can be verified that the system is stable and that measurements are reliable.

Observing and measuring the state variables of the physical system in real-time (step f): The real-time state variables of the physical system are observed and/or measured. These variables are the real-time input data used to assess the system's current state.

Comparing the observed real-time state variables to the global performance map (step g): The observed real-time state variables are then compared to the global performance map. This comparison involves finding the nearest cluster in the state space that corresponds to the real-time state of the system. By comparing the current state to the predefined clusters, the system determines how closely the real-time state matches the conditions for which the machine learning model was trained and tested.

Calculating a confidence index (step h): Finally, based on the comparison between the observed real-time state and the stored cluster information (ML and CL), a confidence index is calculated. This index indicates whether the machine learning model is operating within the predefined performance thresholds (ML and CL) for the respective cluster. The confidence index helps assess if the model's predictions can be trusted for the current system state.

Measures of the variables of said technical system may be performed by at least one of the following sensors:

- a current sensor, for example, a Hall effect current sensor, a shunt resistor, a current transformer, a Rogowski coil,
- a voltage (tension) sensor, for example, a voltage divider, a potentiometer, a capacitive voltage sensor, a resistive voltage sensor,
- an electric flux sensor, for example, a fluxgate magnetometer, a flux sensor,
- a power sensor, for example, a wattmeter, a power factor meter,
- an electric field sensor, for example, a capacitive electric field sensor, an electrostatic sensor,
- a resistance sensor, for example, an ohmmeter, a Wheatstone bridge,
- an inductance sensor, for example, an LVDT (Linear Variable Differential Transformer), an inductive proximity sensor,
- a capacitance sensor, for example, a capacitive proximity sensor, a dielectric sensor
- a temperature sensor, for example, a thermocouple, a thermistor, a Resistance Temperature Detector (RTD), an infrared sensor,
- a pressure sensor, for example, a piezoelectric sensor, a capacitive sensor, a Hall effect sensor, a manometer, a barometer,
- a humidity sensor, for example, a hygrometer, a relative humidity sensor, an absolute humidity sensor,
- a force sensor, for example, a strain gauge, a piezoelectric force sensor, a load cell,
- a torque sensor, for example, a strain gauge torque sensor, a rotary torque sensor, a magnetoelastic torque sensor, an optical torque sensor,
- a displacement or position sensor, for example, an encoder, a potentiometer, a Linear Variable Differential Transformer (LVDT), an ultrasonic sensor, a magnetic sensor,
- a speed or acceleration sensor, for example, an accelerometer, a gyroscope, a Doppler radar, a Hall effect speed sensor,
- a level sensor, for example, a float sensor, an ultrasonic level sensor, a capacitive level sensor, a radar level sensor,
- a flow sensor, for example, a mass flow meter, a volumetric flow meter, an ultrasonic flow meter, an electromagnetic flow meter,
- a light or radiation sensor, for example, a photodiode, a photoresistor, a visible light sensor, a UV sensor, an infrared sensor,
- a gas or air quality sensor, for example, a $CO_2$ detector, a carbon monoxide detector, a smoke detector, an air quality sensor,
- a chemical sensor, for example, an ion selective electrode, a pH sensor, a dissolved oxygen sensor, a specific gas sensor,
- an acoustic sensor, for example, a microphone, a hydrophone,
- a vibration sensor, for example, an accelerometer, a piezoelectric sensor,
- a magnetic sensor, for example, a Hall effect sensor, a magnetometer.

Said electrical machine may be a direct current (DC) motor, an alternating current (AC) motor, a synchronous motor, an asynchronous motor (induction motor), a stepper motor, a servo motor, a permanent magnet synchronous motor (PMSM), a brushless DC motor, a switched reluctance motor, a generator (such as a synchronous generator, an induction generator, or an alternator), or any combination of electrical machines capable of converting electrical energy to mechanical energy or vice versa, typically found in industrial, automotive, transportation, or renewable energy systems.

Said physical system comprising an electric machine may be found in a variety of applications, including:

- Transportation systems, such as electric vehicles, electric trains, electric scooters, electric bicycles, hybrid electric vehicles, electric aircraft, and automated guided vehicles (AGVs),
- Industrial and manufacturing systems, including industrial robots, conveyor belt systems, CNC machines, 3D printers, and electric forklifts,
- Building systems, such as elevator systems and HVAC systems (heating, ventilation, and air conditioning),
- Home appliances, including washing machines, pumps, and compressors,
- Renewable energy systems, such as wind turbines and renewable energy power generation systems (e.g., solar, wind, or hydroelectric systems),
- Aerospace and robotics systems, such as drones and other autonomous machines.

These systems typically utilize an electric motor, generator, or a combination thereof to convert electrical energy to mechanical energy or vice versa, often for propulsion, control, or power generation.

The performance of the machine learning model may be evaluated through various metrics, depending on the nature of the task. In the case of classification, common metrics include accuracy, precision, recall, F1 score, the area under the ROC curve (AUC), the confusion matrix, and the Matthews correlation coefficient (MCC). For regression tasks, metrics like mean absolute error (MAE), mean squared error (MSE), root mean squared error (RMSE), R-squared ($R^2$), mean absolute percentage error (MAPE), and adjusted R-squared are often used to assess the model's performance.

Said method may further comprise, before step (d2), removing constant dimensions from the state vector, wherein constant dimensions are those dimensions that vary by less than a predefined threshold across different observations in the state vector.

This step involves removing constant dimensions from the state vector before clustering the data points. Constant dimensions are those variables in the state vector that show little to no variation across different observations. By eliminating these dimensions, the method reduces unnecessary complexity, ensuring that only the variables that have meaningful variation and impact on the system's behavior are considered for clustering and performance evaluation. This step improves the efficiency and accuracy of the confidence index by focusing only on the relevant state variables.

Said method may further comprise, before step (d4), verifying the information density of each cluster, to ensure that each cluster contains a number of data points exceeding a predefined threshold.

This step aims to ensure that each cluster contains a sufficient number of data points to provide reliable statistical analysis. If the number of points in a cluster is below the threshold, additional data points may be collected under similar conditions (close to the cluster's center), ensuring that the cluster meets the necessary data density before continuing with further computations. Alternatively, if a cluster density does not meet the threshold, it may not be used for further steps to avoid inaccurate or unreliable performance evaluations.

Additionally, the data in the cluster can be augmented by physical simulation of the system, creating small parameter variations around the test cases used to create the original database. It is important to note that this data augmentation is only used for the creation of the confidence index, and not for the training or testing of the machine learning model itself. The reason for this is that a lack of representativeness in the simulation could impact the performance of the confidence index but would not affect the real performance of the machine learning model. Furthermore, it is required that the machine learning model make inferences on different data points than those in the learning set.

As an alternative to physical modeling via simulation, new data points could be generated by generative machine learning models, trained to generate data points and observer outputs based on physical parameters. In this case, the generative model would act like a simulation and can be used in the same way. However, similar to physical simulation, the representativeness of the generative model will impact the performance of the confidence index.

If the number of points in a cluster is below the threshold, additional data points may be collected under similar conditions (i.e. data points that belongs to the cluster),

Said method may further comprises, before step (d7), augmenting the data within each cluster by performing simulations that generate additional data points based on parameter variations of the physical system.

Said method may further comprises, before step (d7), removing state vector dimensions that are independent of the model performance, thereby reducing the state vector to only dimensions relevant to the performance of the machine learning model.

This step involves removing state vector dimensions that do not influence the performance of the machine learning model before calculating performance limits. By identifying and eliminating dimensions that are independent of model performance, the state vector is reduced to only the variables that directly impact the model's predictions. The primary benefit of removing these dimensions (constant or independent of performance) lies in reducing computational complexity, resulting in time efficiency and simplified implementation, while also enhancing the reliability of the confidence index by minimizing potential biases in distance calculations.

The present document also concerns a computer program comprising instructions for implementing the above-mentioned method, when this program is executed by a processor.

The present document also concerns a non-transitory computer-readable recording medium on which is recorded a program for implementing the above-mentioned method, when said program is executed by a processor.

The present document also concerns a computer device comprising:

- an input interface to receive at least one input sensor signal, said sensor signal representing a real-time observation and/or measurement of state variables of a physical system,
- a memory for storing at least instructions of said computer program,
- a processor accessing the memory for reading the aforesaid instructions and executing then the above-mentioned method,
- an output interface to provide information concerning the confidence index.

The device may be any suitable processor-driven device, including, but not limited to, a mobile device or a non-mobile device, for example, a static device. A processor may comprise one or more computing units and may comprise, for example, electronic circuits, quantum, photonic and/or optical calculators. For example, the device may comprise a desktop computer, a laptop computer, a rack-mounted computer, a tablet, a personal digital assistant (PDA) or a wearable wireless device (for example, a bracelet, watch, glasses, ring, cell phone or smartphone) or an Internet of Things (IoT) device.

**Brief description of the drawings**

Other features, details and advantages will become apparent from the detailed description below, and from an analysis of the attached drawings, in which:

[Fig. 1] is a schematic diagram illustrating a computer device according to the present document,
[Fig. 2] is a schematic diagram illustrating the method according to the present document.

**Detailed description of the drawings**

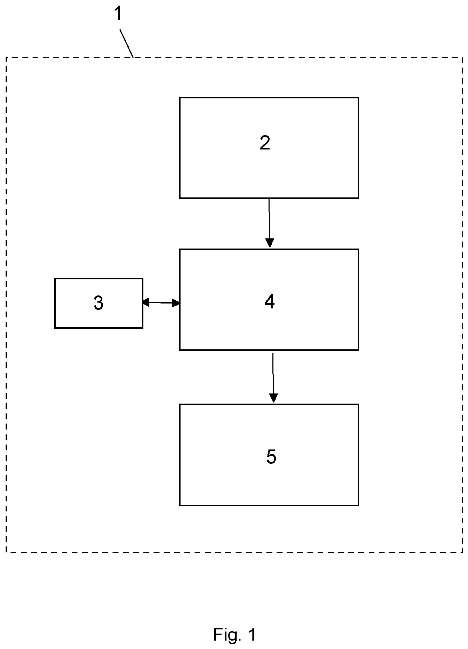

Figure 1 shows a computer device (1) comprising:

- an input interface (2) to receive at least one input sensor signal, said sensor signal representing a real-time observation and/or measurement of state variables of a physical system,
- a memory (3) for storing at least instructions of a computer program according to claim 6,
- a processor (4) accessing the memory (3) for reading the aforesaid instructions and executing then the method according to one of claims 1 to 5,
- an output interface (5) to provide information concerning the confidence index.

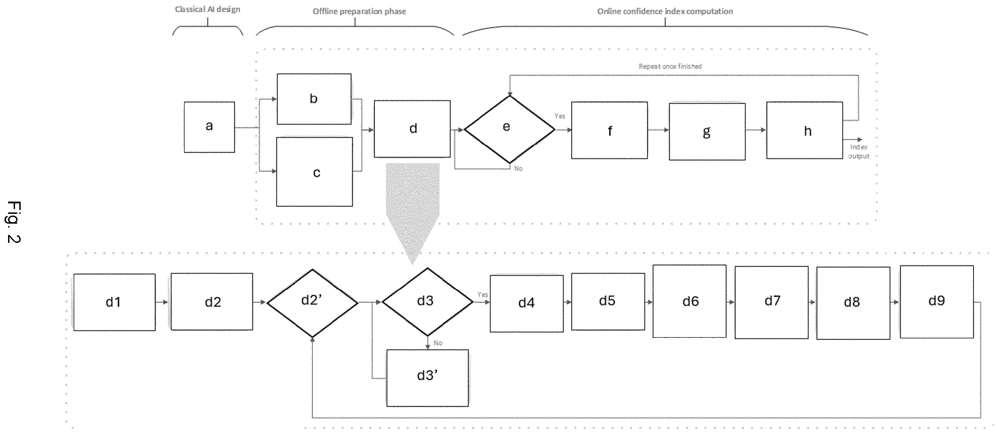

The method according to the present document is shown in Figure 2. Said method aims to compute a confidence index of a prediction made by a machine learning model able to predict a state of a physical system comprising an electrical machine. Said method comprises the following steps:

(a) training said machine learning model using supervised learning on a training dataset;
(b) estimating the performance of the machine learning model on a test dataset and associating each data point in the test dataset with a performance value;
(c) observing and/or measuring system state variables for each data point in the test dataset to capture corresponding state variables;
(d) creating a global performance map based on the state variables and the performance values of the machine learning model,
(e) detecting a steady state of the physical system before performing real-time observations, wherein the steady state is detected by monitoring the state variables over a predefined time window and ensuring that variations in the state variables remain within a predefined tolerance range; and, while said steady state is active,
(f) observing and/or measuring the state variables of the physical system in real-time;
(g) comparing the observed real-time state variables to the global performance map to find the nearest cluster in state space that corresponds to the real-time state; and
(h) calculating a confidence index based on the comparison between the observed real-time state and the stored cluster information, wherein the confidence index indicates whether the machine learning model is operating within predefined performance thresholds associated with the ML and CL limits for the respective cluster.

More particularly, said step (d) comprises the following sub-steps

(d1) removing constant dimensions from the state vector, wherein constant dimensions are those dimensions that vary by less than a predefined threshold across different observations in the state vector,

(d2) clustering in state space the data points of the test dataset, wherein the clustering is based on the similarity of the state vectors obtained from the observed or measured state variables; and for each cluster (d2'),

(d3) verifying the information density of each cluster, to ensure that each cluster contains a number of data points exceeding a predefined threshold,

(d3') if the number of points in a cluster is below the threshold, collecting additional data points under similar conditions (i.e. data points that belongs to the cluster),

(d4) identifying a center vector for each cluster, wherein the center vector represents the average state of the data within the cluster or the closest data point within said cluster,

(d5) augmenting the data within each cluster by performing simulations that generate additional data points based on parameter variations of the physical system,

(d6) removing state vector dimensions that are independent of the model performance, thereby reducing the state vector to only dimensions relevant to the performance of the machine learning model,

(d7) calculating a mean limit (ML) for each cluster,

(d8) calculating a conservative limit (CL) for each cluster,

(d9) storing the cluster information including the center vector, the mean limit, and the conservative limit in the global performance map.

Step (a) constitutes a training phase of the machine learning model. Steps (b), (c) and (d) constitute an offline preparation phase. Steps (e), (f), (g) and (h) constitute an online phase.

The offline phase refers to the preparation phase where computations and analysis are performed before the system operates in real-time. During this phase, calculations are done without any real-time interaction with the system. On the contrary, the online phase involves real-time interaction with the physical system. During this phase the system is running and real-time data is generated that needs to be processed immediately for decision-making or control purposes.

The confidence index provided may be presented to the user as categorical states. These categories may offer an intuitive representation of the machine learning model's expected performance in real-time, compensating for the fact that the actual performance ($\Phi_a$) is not directly known during inference.

The categories may be defined as follows:

- Confidence Zone (Green) : When the system operates within the Conservative Limit (CL), it indicates a high confidence that the AI's performance ($\Phi_a$) is greater than the targeted performance threshold ($\Phi_t$), based on the learning dataset. This state suggests that the machine learning model is performing reliably.

- Warning Zone (Orange) : When the system state falls between the Conservative Limit (CL) and the Mean Limit (ML), the confidence index indicates that, on average, the machine learning model should perform with ($\Phi_a$) greater than ($\Phi_t$). However, the model may not be sufficiently familiar with the current conditions, creating a risk that ($\Phi_a$) could drop below ($\Phi_t$).

- Suspicion Zone (Red) : When the system operates beyond the Mean Limit (ML), the confidence index suggests that, on average, the model's performance will likely be below the targeted threshold ($\Phi_t$), with a high probability that ($\Phi_a$) will be less than ($\Phi_t$).

<u>Example of a Direct Online (DOL) Induction Motor</u>

To illustrate the method, a reference model of an induction motor (IM) is defined. The reference model is derived from established literature (e.g., "Sensorless AC Electric Motor Control," Springer). Although this model specifically applies to induction motors, the same approach can be readily adapted to synchronous motors with minimal modifications. Furthermore, the choice of the (d,q) reference frame, while used in this example, is not restrictive; other coordinate systems, such as ($\alpha,\beta$) or three-phase systems, may equally be employed without affecting the applicability of the method.

The (d,q) reference frame is a rotating coordinate system commonly used in the analysis and control of AC machines, such as induction motors and synchronous motors. The (d,q) frame simplifies the mathematical modeling of these machines by transforming the three-phase currents and voltages into a two-axis system (direct axis d and quadrature axis q) that rotates synchronously with the motor's magnetic field. This transformation is known as Park's transformation.

The ($\alpha,\beta$) reference frame, also called the stationary reference frame or Clarke transformation, transforms the three-phase AC system into a two-phase system that remains stationary.

The following parameters and variables are defined:

<u>Set of physical parameters:</u>

$R_s$ Stator resistance

$R_r$ Rotor resistance

$L_s$ Stator cyclic inductance

$L_r$ Rotor cyclic inductance

$M_{sr}$ Stator and Rotor mutual cyclic inductance

$\sigma$ Blondel Leakage coefficient

$f_v$ Viscous damping coefficient

$J$ Motor and load inertia

$p$ Poles pairs number

Set of variables:

$\omega_s$ Stator electrical angular frequency
$v_{sd}$ d axis stator voltage in the rotating frame (d,q)
$v_{sq}$ q axis stator voltage in the rotating frame (d,q)
$i_{sd}$ d axis stator current in the rotating frame (d,q)
$i_{sq}$ q axis stator current in the rotating frame (d,q)
$\phi_{rd}$ d axis rotor magnetic flux in the rotating frame (d,q)
$\phi_{rq}$ q axis rotor magnetic flux in the rotating frame (d,q)
$T_l$ Load torque
$\Omega$ Rotor mechanical speed

We can define the following parameters:

$$a = \frac{R_r}{L_r} \; ; b = \frac{M_{sr}}{\sigma L_s L_r} \; ; c = \frac{f_v}{J} ; \; \gamma = \frac{(L_r^2 R_s + M_{sr}^2 R_r)}{\sigma L_s L_r^2} \; ; \; \sigma = 1 - \left(\frac{M_{sr}}{L_s L_r}\right) ; m = \frac{p M_{sr}}{J L_r} \; ; m_1$$

$$= \frac{1}{\sigma L_s}$$

By considering that the load torque $T_l$ changes slowly or is piecewise constant, it can be added to the state vector with the approximation $\frac{dT_l}{dt} = 0$. Then the state space dynamics of the induction motor in the (d,q) frame can be written

$$
\begin{bmatrix}
\frac{di_{sd}}{dt} \\
\frac{di_{sq}}{dt} \\
\frac{d\phi_{rd}}{dt} \\
\frac{d\phi_{rq}}{dt} \\
\frac{d\Omega}{dt} \\
\frac{dT_l}{dt}
\end{bmatrix}
=
\begin{bmatrix}
-\gamma i_{sd} + \omega_s i_{sq} + ba\phi_{rd} + bp\phi_{rq} \\
-\omega_s i_{sd} - \gamma i_{sq} - bp\phi_{rd} + ba\phi_{rq} \\
aM_{sr} i_{sd} - a\phi_{rd} + (\omega_s - p\Omega)\phi_{rq} \\
aM_{sr} i_{sq} - (\omega_s - p\Omega)\phi_{rd} - a\phi_{rq} \\
m(i_{sq} - \phi_{rq} i_{sd}) - c\Omega - \frac{1}{J} T_l \\
0
\end{bmatrix}
+
\begin{bmatrix}
m_1 & 0 \\
0 & m_1 \\
0 & 0 \\
0 & 0 \\
0 & 0 \\
0 & 0
\end{bmatrix}
\begin{bmatrix}
v_{sd} \\
v_{sq}
\end{bmatrix},
$$

with the state vector $x_{dq} = \begin{bmatrix} i_{sd} \\ i_{sq} \\ \phi_{rd} \\ \phi_{rq} \\ \Omega \\ T_l \end{bmatrix}$ , which is demonstrated observable without constraint if the stator currents and rotor speed are measured, and observable under conditions (unobservability line in generator mode or at zero speed) if only the stator currents are available. In the sensorless case (no speed measurement), we consider that the database only contains observable datapoints.

Then we can consider the availability of an estimation of the state vector

$\widehat{x_{dq}} = \begin{bmatrix} \widehat{i_{sd}} & \widehat{i_{sq}} & \widehat{\phi_{rd}} & \widehat{\phi_{rq}} & \widehat{\Omega} & \widehat{T_l} \end{bmatrix}^T$ , as the output of the observer ($\hat{\Omega} = \Omega_{meas}$ the measured rotor

mechanical speed in the case of available measurement).

And the availability of a vector

$$\Psi = [R_s \quad R_r \quad L_s \quad L_r \quad M_{sr} \quad \sigma \quad f_v \quad J \quad p \quad v_{sd} \quad v_{sq} \quad T_l]^T = [P \quad U]^T,$$

concatenation of the parameters vector $P = [R_s R_r L_s L_r M_{sr} \sigma f_v J p]^T$ and the inputs vector $U = [v_{sd} v_{sq} T_l]^T$, which is known for each datapoint of the test dataset, and input of the simulation.

The elements of $\Psi$ are independent in the model, but technologically dependent: real motors do not exist with every combination in P. So, we get the value of $\Psi$ for the real test cases used for data generation, and only simulate possible (small for P, representative for U) variations around these instances of real test cases. The user will take care to keep the variations boundaries in line with realistic possibilities of simulated motors.

It should be noted that $T_l$ is considered in the state vector for the sake of observability as it is commonly an unknown value a priori during operation, but during offline database creation (i.e. lab conditions) it can very well be considered as a known input.

### Creation of a database

A database D1 is created, with training and test subsets that are built to cover the future operating conditions for the machine learning model during the inference phase.

For each data point of the test set, the following information is available:

- [Data] : the information linked to the motor that is used to train and test the machine learning model.
-

$$\Psi = [R_s \quad R_r \quad L_s \quad L_r \quad M_{sr} \quad \sigma \quad f_v \quad J \quad p \quad v_{sd} \quad v_{sq} \quad T_l]^T$$

the vector of parameters and inputs.
The parameters $P = [R_s R_r L_s L_r M_{sr} \sigma f_v J p]^T$ are known through datasheet, measurements, or identification procedures. The inputs or context data $U = [v_{sd} v_{sq} T_l]^T$ are well known through measurements or knowledge of the command chain for the voltages, and through measurements or a test bench allowing to produce a defined load torque for the load torque.

-

$$\widehat{x_{dq}} = \begin{bmatrix} \widehat{i_{sd}} & \widehat{i_{sq}} & \widehat{\phi_{rd}} & \widehat{\phi_{rq}} & \widehat{\Omega} & \widehat{T_l} \end{bmatrix}^T$$

the estimated state vector for the steady state condition of the data point, known through the observer running during the generation of the data.

### Training of the machine learning model

The machine learning model is trained to achieve a satisfying performance on a test database subset (e.g.

common 75%/25% train/test random repartition). The hypothesis being that the machine learning model has learned on the train database and achieved a satisfying performance on a test database to conclude that its learning is completed. The train and test databases are supposed to reproduce a representative span of the expected operating conditions of the motor driven system at the time of the machine learning model training.

A machine learning test result is considered available for all test data points. For instance:

- Success or failure of the classification in the case of a classification problem.
- Error or accuracy measurement in the case of a regression problem, translated for simplification to an OK/NOK result by comparison to an acceptance threshold.

To simplify the notations, the estimated state vector $\widehat{X_{dq}} = \begin{bmatrix} \widehat{I_{sd}} & \widehat{I_{sq}} & \widehat{\phi_{rd}} & \widehat{\phi_{rq}} & \widehat{\Omega} & \widehat{T_l} \end{bmatrix}^T$ may be

expressed also $\widehat{X_{dq}} = \begin{bmatrix} \widehat{X_{dq_1}} & \widehat{X_{dq_2}} & \widehat{X_{dq_3}} & \widehat{X_{dq_4}} & \widehat{X_{dq_5}} & \widehat{X_{dq_6}} \end{bmatrix}^T$ to address generically the variables

$\widehat{X_{dq_I}}$ of $\widehat{X_{dq}}$.

State dimension reduction for confidence index (constant dimensions)

A subset $\widehat{X_{dq}}$ of the state vector $\widehat{X_{dq}}$ is constituted to reduce its dimension by removing constant (or with small variations) dimensions.

At initialization, $\widehat{\chi_{dq}} = \widehat{X_{dq}}$.

Then, the following steps are performed for each variable of the estimated state vector $\widehat{X_{dq}}$:

- Identify the span $\overline{\Delta X_{dq_I}}$ between the minimum and maximum reached value of the variable $\widehat{X_{dq_i}}$.

- Define a limit $\overline{\Delta X_{dq_{I\,threshold}}}$ under which the variability is neglected (to cover the small variations due to the experimental dispersion for a same point).

- If $\overline{\Delta X_{dq_i}} < \overline{\Delta X_{dq_{I\,threshold}}}$ then the variable $\widehat{X_{dq_I}}$ is removed from $\widehat{\chi_{dq}}$ as its variability in the test base is considered insignificant.

Clustering

The goal of this step is to gather the data by their respective state vector to create clusters of data which are close enough to extract a mean performance from close states.

Two approaches may be used:

Firstly, a manual clustering using the experimental use cases as source of clusters: this approach requires some expertise to be able to link sets of $\Psi$ to sets of $\widehat{\chi_{dq}}$, but in practice, as $\Psi$ parameters are already known, if several acquisitions are taken for each experimental use case, it can create a cluster by itself (e.g. one given motor will fix P while configuration (bench) will fix U through voltage and load variations).

Secondly, an automatic clustering using clustering algorithms on all the $\widehat{\chi_{dq}}$ of the test database to extract clusters minimizing distance (L2 norm) criteria between each point. This method is more agnostic and requires less expertise as the clustering is automatic, and only requires setting a maximum variation

$$\Delta\widehat{\chi_{dq}}_{clust} = \begin{bmatrix} \widehat{\Delta\chi_{dq_1}}_{clust} & \widehat{\Delta\chi_{dq_2}}_{clust} & \widehat{\Delta\chi_{dq_3}}_{clust} & \widehat{\Delta\chi_{dq_4}}_{clust} & \widehat{\Delta\chi_{dq_5}}_{clust} & \widehat{\Delta\chi_{dq_6}}_{clust} \end{bmatrix}^T$$

on each state vector variable (linkage criteria) to allow to be in the same cluster. Algorithms using Divisive Hierarchical clustering would result in N sets (clusters) of data with all their $\widehat{\chi_{dq}}$ within $\Delta\widehat{\chi_{dq}}_{clust}$ .

Cluster information density

For each data cluster, a mean performance of the machine learning model is computed along all the data points of the cluster. The representativeness of the mean performance should be ensured. To that extent, an information density value is computed on each cluster. If it is greater than a predefined density threshold, the mean machine learning model performance is considered representative for this cluster.

Therefore, let's define two constants: a minimal distance (L2 norm) $d_\varepsilon$ and a density threshold $D_{th}$. Then, a cluster information density $D_I$ is computed on each cluster i $\in$ [1, ..., N] as follows:

$$D_i = \frac{K_{i\epsilon}}{\prod_j \widehat{\Delta\chi_{dq}}_{j\,max}},$$

with $K_{i\varepsilon}$ the maximum possible number of data points $m_n$ ($n \in [1, ..., K_{i\varepsilon}]$) in the cluster i, such as $\forall k_1 \in [1, ..., K_{i\varepsilon}]$, $\forall k_2 \in [1, ..., K_{i\varepsilon}$, $dist(m_{k1}, m_{k2}) > d_\varepsilon$ (L2 norm).

If the density $D_I$ of the cluster i is greater or equal than $D_{th}$, the mean machine learning model performance value is computed on the $K_{i\varepsilon}$ data points previously determined and is considered representative for this cluster i.

Optionally, if the mean value of a cluster i is not representative due to lack of data ($D_i < D_{th}$), it should be considered to come back to data acquisition using $\Psi$ values close to the ones of the cluster, so that the associated $\widehat{\chi_{dq}}$ values land in the same cluster area. After this data augmentation, if $D_i \geq D_{th}$, the mean performance of the cluster i can then be computed.

Centers of the clusters

For each cluster, its centroid $\widehat{\chi_{dq}}_{center}$ is defined as the mean of the estimated state vectors of all the points in the cluster. For a $K_{i\varepsilon}$ elements cluster i, $\widehat{\chi_{dq}}_{center} = \frac{1}{K_{i\epsilon} \Sigma_{K_{i\epsilon}} \widehat{\chi_{dq}}}$ .

Then, the data point with its $\widehat{\chi_{dq}}$ the closest to $\widehat{\chi_{dq}}_{center}$ is selected as central point of the cluster, its estimated state vector is noted $\widehat{\chi_{dq}}_C$ , and its corresponding parameter and input vector is noted $\Psi_C$.

Data augmentation by simulation

Let's define parameter and input variation spans for simulation values.

For each parameter or input $\Psi_I$ of $\Psi$, we define a variation vector $\Psi_i var$ by $\delta\Psi_I$ step:

$$\Psi_i var = [\Psi_i - \alpha_i\delta\Psi_i \quad ... \quad \Psi_i - \delta\Psi_i \quad \Psi_i \quad \Psi_i + \delta\Psi_i \quad ... \quad \Psi_i + \beta_i\delta\Psi_i]^T$$

with $\alpha_I$ and $\beta_I$ positive integers allowing to define minimal and maximal variation values, respectively, chosen to cover the range of possible values.

Example for $\Psi_i = R_s$, $\delta R_s = 0.1R_s$ , $\alpha = \beta = 3$:

$$R_s var$$

$$= [R_s - 0.3R_s \quad R_s - 0.2R_s \quad R_s - 0.1R_s \quad R_s \quad R_s + 0.1R_s \quad R_s + 0.2R_s \quad R_s + 0.3R_s]^T$$

This describes a +/- 30% variation around the initial $R_s$ parameter value.

Doing the same for all element of $\Psi$ leads to the creation of the total variation $\Psi_{var}$ around a datapoint defined by $\Psi$ in the database.

It should be noted that the computation time during the preparation phase will be highly related to the number of

variations ($\alpha_I$ and $\beta_i$) chosen, so a compromise between precision and computational time should be considered.

In addition, the poles pairs number p will stay fixed, and the confidence index will be computed for the same value of p than the ones used for the training and test database ($\alpha = \beta = 0$ for parameter p).

Using a representative simulation of the physical system, with $\Psi$ as input and providing $\widehat{X_{dq}}$ and the data used for machine learning model as output, the state space dynamics of the induction motor in the (d,q) frame provided above are implemented.

Through this process, all combinations of $\Psi_{var}$ are computed, yielding the following information for each cluster:

- a collection of reduced state vectors $\widehat{X_{dq}}$ as outputs of the simulation.
- a collection of data used for AI learning, the simulated equivalent of the data used for machine learning model training in the database. It creates a database by itself for each cluster.

Each datapoint from the cluster database should be tagged from its corresponding $\widehat{X_{dq}}$ as metadata.

Possibility to reduce the number of combinations

Depending on the length $L_\Psi$ of $\Psi$ and of the associated $\alpha_I$ and $\beta_I$ values ($i \in [1, ..., L_\Psi]$) linked to each element of $\Psi$, the number of combinations $\Pi_i(1 + \alpha_i + \beta_i)$ may become quite large. For instance, with $L_\Psi = 11$, $\alpha_i = 3$ and $\beta_i = 3 \,\forall i \in [1, ...,11]$, the number of combinations is equal to $7^{11}$, which means about 2 billion combinations.

This number may need to be reduced. A possible way to do so consists in randomly selecting $N_C$ combinations among these $\Pi_i(1 + \alpha_i + \beta_i)$ combinations. Each combination is made of $L_\Psi$ elements: one element of $\Psi_{var,1}$, one element of $\Psi_{var,2}$, ..., and one element of $\Psi_{var,L_\Psi}$, with $\Psi_{var,I}$ the variation vector of the i-th component of $\Psi$.

A possible way to select each of the $N_C$ combinations consist in randomly choosing each of its $L_\Psi$ elements among each associated $\Psi_{var,I}$ variation vector according to equally distributed laws.

Dimension reduction

The goal of this step is to remove from $\widehat{X_{dq}}$ the dimensions the least meaningful for the performance or even independent from it. To that extent, for each dimension $\widehat{X_{dq_i}}$ of $\widehat{X_{dq}}$, let's define the correlation *Corr$_i$* between:

- The distance of the data points from the center of the cluster alongside the concerned dimension,
- and the machine learning model performance associated to these datapoints.

Then, the absolute values |Corr$_I$| of all dimensions are sorted from the highest to the lowest. The dimension(s) with the lowest |Corr$_I$| being the least meaningful, remove as many dimension(s) as necessary, by choice of the user, starting from the bottom of the sorting. Since the final selection criterion is to eliminate dimensions that are independently irrelevant to performance, retaining a dimension with minimal impact is not an issue, apart from the increased computational time it may cause.

One way to do this could be, for instance, to compute the relative correlations $\mathrm{Corr}_i^{rel} = \frac{|\mathrm{Corr}_i|}{\max_i(|\mathrm{Corr}_i|)}$, and then remove the dimensions whose associated $\mathrm{Corr}_i^{rel}$ is below a predefined threshold. Another way could focus on the gaps between the different sorted $\mathrm{Corr}_i^{rel}$, removing the dimensions associated to $\mathrm{Corr}_i^{rel}$ highly lower than the others.

Note that a dimension independent from the performance may not have a correlation equal to zero due to the influence of the other dimensions. Thus, the usage of relative correlations is to be preferred for a meaningful analysis.

Compute cluster ML and CL (distance vs threshold)

It should be reminded that, at this point, the machine learning model has been trained on the original database D1 and have a satisfying test score on the test subset, but its ability to extend outside of the train set is under question.

For each cluster, each simulated data has its tagged $\widehat{\chi_{dq}}$ and is associated to a common central point of the cluster $\widehat{\chi_{dqC}}$.

For each data point, the distance $\left\|\widehat{\Delta\chi_{dq}}\right\| = \left\|\widehat{\chi_{dq}} - \widehat{\chi_{dqC}}\right\|$ is computed (using L2 norm, with $\|\ \|$ notation explicating the use of L2 norm).

<u>ML seeking</u>

The Mean Limit (ML) is the distance $\widehat{\Delta\chi_{dq}}$ to the cluster centroid under which the machine learning model performs statistically at the required performance (meaning it does not take a potential high sensitivity to one state vector dimension into account).

<u>Initialization</u>

During initialization, the following steps are performed:

- Initializing $\left\|\Delta\widehat{\chi_{dq_{high}}}\right\| = \left\|\Delta\widehat{\chi_{dq_{max}}}\right\|$ (the highest distance limit for the cluster, see above section "clustering").

- Initializing $\left\|\Delta\widehat{\chi_{dq_{incr}}}\right\| = \left\|\Delta\widehat{\chi_{dq_{high}}}\right\|$.

- Defining a number of iterations $N_{iter}$ for the dichotomy.
- Defining $NB_{sample}$, the minimum number of data points necessary to create a dataset where computing the machine learning model performance still have a statistical relevance.

- Finding $\left\|\Delta\widehat{\chi_{dq_{Min}}}\right\|$, the minimal distance guaranteeing that the dataset constituted by all associated datapoints verifying $\left\|\widehat{\Delta\chi_{dq}}\right\| \geq \left\|\Delta\widehat{\chi_{dq_{Min}}}\right\|$ is statistically relevant to compute a meaningful performance in terms of number of datapoints (at least $NB_{sample}$ data points).
- Measuring the machine learning model performance $\Phi_{\Delta min}$ on this minimal test set and compare it to the performance threshold $\Phi_t$: if $\Phi_{\Delta min} < \Phi_t$ then, either the machine learning model overlearned its learning set (machine learning model extrapolation capability is low as it is not able to do inferences on points close to learned physical states), or the simulation is not representative enough of the reality, or simply $\Phi_t$ is set to be too demanding and could be reevaluated. These points should be solved before going further. Further, we assume that $\Phi_{\Delta min} \geq \Phi_t$.

- Initializing $\left\|\Delta\widehat{\chi_{dq_{Low}}}\right\| = \left\|\Delta\widehat{\chi_{dq_{Min}}}\right\|$.

- Defining a minimum distance $D_{min}$ under which the upper limit $\left\|\Delta\widehat{\chi_{dq_{high}}}\right\|$ and lower limit $\left\|\Delta\widehat{\chi_{dq_{Low}}}\right\|$ would be considered too close to define a relevant set between them in the state space.

- Verifying that the data test set verifying $\left\|\Delta\widehat{\chi_{dq_{Low}}}\right\| \leq \left\|\widehat{\Delta\chi_{dq}}\right\| \leq \left\|\Delta\widehat{\chi_{dq_{high}}}\right\|$ does contain enough data to compute machine learning model performance (at least $NB_{sample}$ data points). If it is not the case, stop the algorithm and come back to the data generation to add more data in this cluster.

<u>Mean Limit (ML) computation loop</u>

A test set is created with all data in the cluster associated to the $\widehat{\Delta\chi_{dq}}$ verifying:

$$\left\|\Delta\widehat{\chi_{dq_{Low}}}\right\| \leq \left\|\widehat{\Delta\chi_{dq}}\right\| \leq \left\|\Delta\widehat{\chi_{dq_{high}}}\right\| \text{ (same as } \left\|\Delta\widehat{\chi_{dq_{Min}}}\right\| \leq \left\|\widehat{\Delta\chi_{dq}}\right\| \leq \left\|\Delta\widehat{\chi_{dq_{Max}}}\right\| \text{ at initialization).}$$

For i=1 to i=$N_{iter}$: $\left\|\Delta\widehat{\chi_{dq_{incr}}}\right\| = \dfrac{\left\|\Delta\widehat{\chi_{dq_{high}}}\right\| - \left\|\Delta\widehat{\chi_{dq_{Low}}}\right\|}{\lambda}$ with $\lambda > 1 \in \mathbb{R}$ (Higher $\lambda$ will be more precise for limit determination, but with slower computation time).

- If the data test set verifying $\left\|\Delta\widehat{\chi_{dq_{Low}}}\right\| \le \left\|\Delta\widehat{\chi_{dq}}\right\| \le \left\|\Delta\widehat{\chi_{dq_{high}}}\right\|$ does not contain enough data to compute the machine learning model performance (less than $NB_{sample}$ data points), the following steps are performed:

  ○ If last changed boundary was $\left\|\Delta\widehat{\chi_{dq_{high}}}\right\|$, then reduce $\left\|\Delta\widehat{\chi_{dq_{Low}}}\right\|$ until it reaches the data number criteria.

  ○ If last changed boundary was $\left\|\Delta\widehat{\chi_{dq_{Low}}}\right\|$, then rise $\left\|\Delta\widehat{\chi_{dq_{high}}}\right\|$ until it reaches the data number criteria.

  ○ Break the loop if the same test set has been defined last iteration.

- If

$$\left(\left\|\Delta\widehat{\chi_{dq_{high}}}\right\| - \left\|\Delta\widehat{\chi_{dq_{Low}}}\right\|\right) \le D_{min},$$

then

$$\left\|\Delta\widehat{\chi_{dq_{Low}}}\right\| = \left\|\Delta\widehat{\chi_{dq_{Low}}}\right\| - \dfrac{\left\|\Delta\widehat{\chi_{dq_{Low}}}\right\| - \left\|\Delta\widehat{\chi_{dq_{Min}}}\right\|}{\lambda}$$

- The machine learning performance $\Phi_a$ is measured on the data test set verifying $\left\|\Delta\widehat{\chi_{dq_{Low}}}\right\| \le \left\|\Delta\widehat{\chi_{dq}}\right\| \le \left\|\Delta\widehat{\chi_{dq_{high}}}\right\|$.

- If $\Phi_a \le \Phi_t$: $\left\|\Delta\widehat{\chi_{dq_{high}}}\right\| = \left\|\Delta\widehat{\chi_{dq_{high}}}\right\| - \left\|\Delta\widehat{\chi_{dq_{incr}}}\right\|$ and end loop iteration (i = i+1).

- If $\Phi_a > \Phi_t$: $\left\|\Delta\widehat{\chi_{dq_{Low}}}\right\| = \left\|\Delta\widehat{\chi_{dq_{Low}}}\right\| + \left\|\Delta\widehat{\chi_{dq_{incr}}}\right\|$ and end loop iteration (i = i+1).

$$\left\|\Delta\widehat{\chi_{dq_{ML_{clust_1}}}}\right\| = \max\left(\left\|\Delta\widehat{\chi_{dq_{Low}}}\right\|, \left\|\Delta\widehat{\chi_{dq_{Min}}}\right\|\right)$$

Conservative Limit (CL) seeking

Initialization

During initialization, the following steps are performed:

- Defining a number of iterations $N_{iter}$ for the dichotomy.

- Defining a minimum distance $D_{min}$ under which the upper limit $\left\|\Delta\widehat{\chi_{dqJ_{high}}}\right\|$ and lower limit $\left\|\Delta\widehat{\chi_{dqJ_{Low}}}\right\|$ would be considered too close to define a relevant set in the state space.
- Defining $NB_{sample}$ as the minimum number of data points to create a dataset where computing the machine learning model performance still have a statistical relevance.

For J=1 to $J = size\left(\widehat{\Delta\chi_{dq}}\right)$ (size() function returning the number of dimensions of its input vector argument) :

- Defining $\widehat{\chi_{dqJ}}$ as the estimated state value corresponding to the current dimension J of the loop.

- For each data point, computing the distance $\left\|\widehat{\Delta\chi_{dqJ}}\right\| = \left\|\widehat{\chi_{dqJ}} - \widehat{\chi_{dqJC}}\right\|$ (using L2 norm, with $\|\ \|$ notation explicating the use of L2 norm).

- Initializing $\left\|\widehat{\Delta\chi_{dqJ_{high}}}\right\| = \left\|\widehat{\Delta\chi_{dq_{max}}}\right\|$ (the highest distance limit for the cluster, cf. section iv about clustering).

  Alternatively, if ML limit has already been computed, the upper limit can be set $\left\|\widehat{\Delta\chi_{dqJ_{high}}}\right\| = \left\|\widehat{\Delta\chi_{dqML_{clust_I}}}\right\|$ as it is already found that it's the mean upper limit to reach $\Phi_t$.

- Initializing $\left\|\widehat{\Delta\chi_{dqJ_{incr}}}\right\| = \left\|\widehat{\Delta\chi_{dqJ_{high}}}\right\|$

- Finding $\left\|\widehat{\Delta\chi_{dqJ_{Min}}}\right\|$, the minimal distance guaranteeing that the dataset constituted by all associated datapoints verifying $\left\|\widehat{\Delta\chi_{dqJ}}\right\| \geq \left\|\widehat{\Delta\chi_{dqJ_{Min}}}\right\|$ allows to be statistically relevant to compute a meaningful performance in terms of number of datapoints (at least $NB_{sample}$ data points). This step (for every dimension J) can be prepared before the loop.

- Measuring the machine learning model performance $\Phi_{\Delta min}$ on this minimal test set and compare it to the performance threshold $\Phi_t$ : if $\Phi_{\Delta min} < \Phi_t$, then, either the machine learning model overlearned its learning set (machine learning model extrapolation capability is low as it is not able to do inferences on points close to learned physical states), or the simulation is not representative enough of the reality, or simply $\Phi_t$ is set to be too demanding and could be reevaluated. These points should be solved before going further. Further, we assume that $\Phi_{\Delta min} \geq \Phi_t$.

- Initializing $\left\|\widehat{\Delta\chi_{dqJ_{Low}}}\right\| = \left\|\widehat{\Delta\chi_{dqJ_{Min}}}\right\|$

- Creating a test set with all data in the cluster associated to the $\widehat{\chi_{dqJ}}$ verifying:

  $\left\|\widehat{\Delta\chi_{dqJ_{Low}}}\right\| \leq \left\|\widehat{\Delta\chi_{dqJ}}\right\| \leq \left\|\widehat{\Delta\chi_{dqJ_{high}}}\right\|$ (same as $\left\|\widehat{\Delta\chi_{dqJ_{Min}}}\right\| \leq \left\|\widehat{\Delta\chi_{dqJ}}\right\| \leq \left\|\widehat{\Delta\chi_{dqJ_{Max}}}\right\|$ at initialization).

- Sorting all $\left\|\widehat{\Delta\chi_{dqJ}}\right\|$ in the direction of increasing $\left\|\widehat{\Delta\chi_{dq}}\right\|$, and removing from the test set all $\widehat{\chi_{dqJ}}$ with a non-strictly increasing $\left\|\widehat{\Delta\chi_{dqJ}}\right\|$ (randomly keep one point if several have the same $\left\|\widehat{\Delta\chi_{dq}}\right\|$). The resulting test set then has only strictly increasing $\left\|\widehat{\Delta\chi_{dq}}\right\|$ in the direction of increasing $\left\|\widehat{\Delta\chi_{dqJ}}\right\|$.

- Verifying that the data test set verifying $\left\|\widehat{\Delta\chi_{dqJ_{Min}}}\right\| \leq \left\|\widehat{\Delta\chi_{dqJ}}\right\| \leq \left\|\widehat{\Delta\chi_{dqJ_{Max}}}\right\|$ does contain enough data to compute machine learning performance (at least $NB_{sample}$ data points). If it is not the case, stop the algorithm and come back to the data generation to add more data in this cluster.

<u>CL seeking</u>

For i=1 to i=$N_{iter}$:

If the data test set verifying $\left\|\widehat{\Delta\chi_{dqJ_{Low}}}\right\| \leq \left\|\widehat{\Delta\chi_{dqJ}}\right\| \leq \left\|\widehat{\Delta\chi_{dqJ_{high}}}\right\|$ II does not contain enough data to compute machine learning model performance (less than $NB_{sample}$ data points):

- If last changed boundary was $\left\|\Delta\widehat{\chi_{dqJ_{high}}}\right\|$, then reduce $\left\|\Delta\widehat{\chi_{dqJ_{Low}}}\right\|$ until it reaches the data number criteria.

- If last changed boundary was $\left\|\Delta\widehat{\chi_{dqJ_{Low}}}\right\|$, then rise $\left\|\Delta\widehat{\chi_{dqJ_{high}}}\right\|$ II until it reaches the data number criteria.

- Break the loop if the same test set has been defined last iteration.

- Compute $\left\|\Delta\widehat{\chi_{dqJ_{incr}}}\right\| = \dfrac{\left\|\Delta\widehat{\chi_{dqJ_{high}}}\right\| - \left\|\Delta\widehat{\chi_{dqJ_{Low}}}\right\|}{\lambda}$, with $\lambda > 1 \in \mathbb{R}$ (Higher $\lambda$ will be more precise for limit determination, but with slower computation time).

$$\text{If} \left(\left\|\Delta\widehat{\chi_{dqJ_{high}}}\right\| - \left\|\Delta\widehat{\chi_{dqJ_{Low}}}\right\|\right) \leq D_{min} \text{ then } \left\|\Delta\widehat{\chi_{dqJ_{Low}}}\right\| = \left\|\Delta\widehat{\chi_{dqJ_{Low}}}\right\| - $$

$$\frac{\left\|\Delta\widehat{\chi_{dqJ_{Low}}}\right\| - \left\|\Delta\widehat{\chi_{dqJ_{Min}}}\right\|}{\lambda}$$

- Measure the machine learning performance $\Phi_a$ on the data test set verifying $\left\|\Delta\widehat{\chi_{dqJ_{Low}}}\right\| \leq \left\|\Delta\widehat{\chi_{dqJ}}\right\| \leq \left\|\Delta\widehat{\chi_{dqJ_{high}}}\right\|$.

- If $\Phi_a \leq \Phi_t$, $\left\|\Delta\widehat{\chi_{dqJ_{high}}}\right\| = \left\|\Delta\widehat{\chi_{dqJ_{high}}}\right\| - \left\|\Delta\widehat{\chi_{dqJ_{incr}}}\right\|$ and end loop iteration on i (i = i+1)

- If $\Phi_a > \Phi_t$, compute $\left\|\Delta\widehat{\chi_{dqJ_{Low}}}\right\| = \left\|\Delta\widehat{\chi_{dqJ_{Low}}}\right\| + \left\|\Delta\widehat{\chi_{dqJ_{incr}}}\right\|$ and end loop iteration on i (i = i+1)

- $\left\|\Delta\widehat{\chi_{dqJ_{CL_{clust_1}}}}\right\| = \max\left(\left\|\Delta\widehat{\chi_{dqJ_{Low}}}\right\|, \left\|\Delta\widehat{\chi_{dqJ_{Min}}}\right\|\right)$ and end loop iteration on J (J=J+1)

$$\left\|\Delta\widehat{\chi_{dq_{CL_{clust_1}}}}\right\| = \min_J\left(\left\|\Delta\widehat{\chi_{dqJ_{CL_{clust_1}}}}\right\|\right)$$

<u>Confidence index map construction</u>

The following information are gathered in a file for all the clusters:

- $\widehat{\chi_{dqC}}$ the cluster centroid coordinates in the state space,

- $\Delta\widehat{\chi_{dq_{ML_{clust_1}}}}$ the minimum limit threshold for this cluster,

- $\Delta\widehat{\chi_{dq_{CL_{clust_1}}}}$ the conservative limit threshold for this cluster.

This file, called global performance map, must be able to be red during runtime to compute the confidence index.
This is the end of the offline preparation phase. After this step, the map will be used online to compute the confidence index.

<u>Confidence index usage: steady state detection</u>

From now on, the machine learning model is considered deployed in its final conditions (for example on a customer site).
Two main methods can be used to detect the steady state, by simple measurement threshold on a time window or by direct use of the observer.

Simple measurement threshold on a time window

*Only electrical measurements*

Define a deviation threshold $\Delta Ivar_{MaX}$ for motor currents and a time window $T_{steady}$. After motor startup, constantly monitor each motor current $I_1$, $I_2$, $I_3$ in RMS values on a time series covering $T_{steady}$ time. During the window, the three mean values are computed, and the minimum and maximum values are updated to get the absolute minimum and maximum on the time window.

The motor is considered under steady state once none of the minimum and maximum RMS values of the currents are further than $\Delta Ivar_{MaX}$ from the mean RMS value.

It should be noted that if any system would not guarantee a constant motor voltage on DOL start (delta-star startup), then the same approach should also be applied to voltage measurements, the system being considered in steady state when all criteria are met on the same time window, or use a delay corresponding to the starting sequence to guarantee steady state seeking after this startup sequence.

*Mechanical measurements available*

If speed and torque measurements are available, they can replace current (and voltage if any) measurements to define the steady state with the same approach, the system being considered in steady state when all criteria are met on the same time window.

Direct use of the observer

The motor state observer used to get $\widehat{\chi_{dq}}$ during preparation phase is used online if its dynamic constraints allow a robust behavior under the application context (i.e. if the observability conditions are met).

Then define a vector $\widehat{\delta\chi_{dq}}_{max} = \left|\dfrac{d\widehat{\chi_{dq}}}{dt}\right|_{max}$ absolute value of the state derivative of $\widehat{\chi_{dq}}$. The system is considered in steady state when estimated $\left|\dfrac{d\widehat{\chi_{dq}}}{dt}\right|$ stays under $\widehat{\delta\chi_{dq}}_{max}$.

It should be noted that compared to the preparation phase, only the $\widehat{\chi_{dq}}$ estimation is used, not the full state $\widehat{X_{dq}}$. Thus, the observer used during operation can be reduced to a $\widehat{\chi_{dq}}$ observer.

Online Confidence index use

Once the steady state is verified:

I. From the embedded cartography, find the closest cluster centroid $\widehat{\chi_{dqC}}$ from the online observer output $\widehat{\chi_{dq}}$.

II. Compute the distance from the observed state to the centroid: $|\widehat{\chi_{dq}} - \widehat{\chi_{dqC}}|$.

III. Retrieve the Conservative Limit $\Delta\widehat{\chi_{dq_{CL_{clust}}}}$ associated with the centroid $\widehat{\chi_{dqC}}$.

If $|\widehat{\chi_{dq}} - \widehat{\chi_{dqC}}| \leq \Delta\widehat{\chi_{dq_{CL_{clust}}}}$, then the confidence index is set in "Confidence zone" mode. Display is updated accordingly (i.e. green color). No need to go further on step IV and V.

IV. Retrieve the Minimum Limit $\Delta\widehat{\chi_{dq_{ML_{clust}}}}$ associated with the centroid $\widehat{\chi_{dqC}}$. If $\Delta\widehat{\chi_{dq_{CL_{clust}}}} < |\widehat{\chi_{dq}} - \widehat{\chi_{dqC}}| \leq \Delta\widehat{\chi_{dq_{ML_{clust}}}}$, then the confidence index is set in "Warning zone". Display is updated accordingly (i.e. orange color). No need to go further on step V.

V. If $|\widehat{X_{dq}} - \widehat{X_{dqC}}| > \Delta\widehat{X_{dq_{ML,clust}}}$ , then the confidence index is set in "Suspicion zone". Display is updated accordingly (i.e. red color).

This computation can be done on each occurrence of the state observer output, or on a mean value of the observer computed on a time window from multiple observations to reject potential noises or small oscillations under steady state detection threshold. The mean approach is valid if the steady state condition has not been breached between the samples used for the averaging.

<u>Combination of an electrical motor and a variable speed drive (VSD)</u>

Consider a scenario where the technical system includes an electrical motor integrated with a variable speed drive (VSD). The introduction of a VSD modifies the input parameter vector P, incorporating control parameters that depend on the control law, such as $F_{current}$ and $\xi_{current}$, which represent the bandwidth and damping factor of the current control loop, respectively.

Additionally, it alters the input variables by adding reference inputs like $\overline{\omega}_{ref}$ and $\overline{\varphi}_{ref}$, corresponding to the reference speed and flux. Consequently, the total model inputs $\Psi = [P\ U]^T$ are adjusted. If the machine learning model operates solely under steady state conditions, the dynamics can be disregarded, and the rest of the framework remains unchanged.

VSDs encompass a variety of motor control laws, each containing parameters that influence their behavior and reference the variables they aim to control, such as current, torque, speed, and position. Despite these variations, the fundamental approach remains consistent. Some VSDs identify motor parameters, and any parametric errors can impact motor behavior. This is addressed by adding VSD-identified variables to P alongside the actual motor parameters, resulting in a comprehensive parameter set:

$$\mathrm{P} = [R_s \quad R_r \quad L_s \quad L_r \quad M_{sr} \quad \sigma \quad f_v \quad J \quad p \quad R_{sVSD} \quad R_{rVSD} \quad L_{sVSD} \quad L_{rVSD} \quad M_{srVSD} \quad \sigma_{VSD} \quad f_{vVSD} \quad J_{VSD} \quad p_{VSD}]^T$$

Introducing a VSD often results in the system spending considerable time in dynamic conditions, where, by nature, the operation of the system do not necessarily reach steady state. One solution is to extend the observed state to include its mean derivatives. To the estimated state vector $\widehat{x_{dq}} = \begin{bmatrix} \widehat{i_{sd}} & \widehat{i_{sq}} & \widehat{\phi_{rd}} & \widehat{\phi_{rq}} & \widehat{\Omega} & \widehat{T_l} \end{bmatrix}^T$, we add its mean derivatives:

$$\widehat{x_{dq\,mean}} = \begin{bmatrix} \widehat{i_{sd\,mean}} & \widehat{i_{sq\,mean}} & \widehat{\dot{\phi}_{rd\,mean}} & \widehat{\dot{\phi}_{rq\,mean}} & \widehat{\dot{\Omega}_{mean}} & \widehat{\dot{T}_{l\,mean}} \end{bmatrix}^T$$

The concatenated vector $x_{dq\,extended} = \begin{bmatrix} \widehat{x_{dq}} & \widehat{x_{dq\,mean}} \end{bmatrix}^T$ is then used to represent the steady state. In practice, $\widehat{x_{dq\,mean}}$ is calculated as an average value during acceleration over a fixed time window. The drive itself is adept at recognizing when it induces motor dynamics, such as when $\overline{\omega}_{ref}$ varies (i.e., $\dot{\overline{\omega}}_{ref}$ is not null or exceeds a small threshold for robustness).

It should be noted that adding derivatives to the state vector does not diminish the significance of steady state data points. These points will simply exhibit a null or minimal $\widehat{x_{dq\,mean}}$ component, which will be processed like any other dimension.

<u>Combination of an electrical motor and a variable speed drive (VSD) with an application device</u>

If the machine learning model performance is dependent on the application device driven by the electrical motor, and if this application can be described as a model in the state space, then the state vector is augmented to the application relative dimensions. These dimensions need to be observable (or measured) by the runtime observer and the rest remains the same. (Example where the application device is a pump driven by the motor: the pressure and the flow are added to the state vector and their measurements to the estimated/measured state vector.)

It should be noted that it would be the same if the motor model is augmented with non-standard dimensions, like fault behavior in case of an AI used for predictive maintenance, for instance.

**Claims**

1. Method for computing a confidence index of a prediction made by a machine learning model able to predict a state of a physical system comprising an electrical machine, the method comprising the following steps:

    (b) estimating the performance of the machine learning model on a test dataset and associating each data point in the test dataset with a performance value;
    (c) observing and/or measuring system state variables for each data point in the test dataset to capture corresponding state variables;
    (d) creating a global performance map based on the state variables and the performance values of the machine learning model, by
    (d2) clustering in state space the data points of the test dataset, wherein the clustering is based on the similarity of the state vectors obtained from the observed or measured state variables; and for each cluster,

    (d4) identifying a center vector for each cluster, wherein the center vector represents the average state of the data within the cluster or the closest data point within said cluster;
    (d7) calculating a mean limit (ML) for each cluster,
    (d8) calculating a conservative limit (CL) for each cluster,
    (d9) storing the cluster information including the center vector, the mean limit, and the conservative limit in the global performance map;

    (f) observing and/or measuring the state variables of the physical system in real-time;
    (g) comparing the observed real-time state variables to the global performance map to find the nearest cluster in state space that corresponds to the real-time state; and
    (h) calculating a confidence index based on the comparison between the observed real-time state and the stored cluster information, wherein the confidence index indicates whether the machine learning model is operating within predefined performance thresholds associated with the ML and CL limits for the respective cluster.

2. Method according to the preceding claim, wherein said method further comprises, before step (d2),
    (d1) removing constant dimensions from the state vector, wherein constant dimensions are those dimensions that vary by less than a predefined threshold across different observations in the state vector.

3. Method according to any of the preceding claims, wherein said method further comprises, before step (d4),
    (d3) verifying the information density of each cluster, to ensure that each cluster contains a number of data points exceeding a predefined threshold.

4. Method according to any of the preceding claims, wherein said method further comprises, before step (d7),
    (d5) augmenting the data within each cluster by performing simulations that generate additional data points based on parameter variations of the physical system.

5. Method according to any of the preceding claims, wherein said method further comprises, before step (d7),
    (d6) removing state vector dimensions that are independent of the model performance, thereby reducing the state vector to only dimensions relevant to the performance of the machine learning model.

6. Computer program comprising instructions for implementing the method according to any of the preceding claims, when this program is executed by a processor.

7. A non-transitory computer-readable recording medium on which is recorded a program for implementing the method according to one of claims 1 to 5, when said program is executed by a processor.

8. Computer device (1) comprising:

    - an input interface (2) to receive at least one input sensor signal, said sensor signal representing a real-time observation and/or measurement of state variables of a physical system,

- a memory (3) for storing at least instructions of a computer program according to claim 6,
- a processor (4) accessing the memory (3) for reading the aforesaid instructions and executing then the method according to one of claims 1 to 5,
- an output interface (5) to provide information concerning the confidence index.

Fig. 1

Fig. 2

Europäisches Patentamt
European Patent Office
Office européen des brevets

# EUROPEAN SEARCH REPORT

**Application Number**

EP 24 30 6901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAUL TOPON ET AL: "Residual Signature Analysis for Wind Turbine Failure Prognosis", 2023 IEEE PES INNOVATIVE SMART GRID TECHNOLOGIES EUROPE (ISGT EUROPE), IEEE, 23 October 2023 (2023-10-23), pages 1-5, XP034533530, DOI: 10.1109/ISGTEUROPE56780.2023.10407545 [retrieved on 2024-01-30] * page 1 - page 3 * | 1-8 | INV. G06N20/00 G05B23/02 |
|  | ----- |  |  |
| A | EP 4 443 258 A1 (SIEMENS AG [DE]) 9 October 2024 (2024-10-09) * paragraph [0008] - paragraph [0016]; figure 2 * | 1-8 |  |
|  | ----- |  |  |
| A | HAN MIAOQUAN ET AL: "Wind Turbine Condition Monitoring Based on Autoencoder and K-means", 2021 INTERNATIONAL CONFERENCE ON SMART-GREEN TECHNOLOGY IN ELECTRICAL AND INFORMATION SYSTEMS (ICSGTEIS), IEEE, 28 October 2021 (2021-10-28), pages 125-129, XP034058918, DOI: 10.1109/ICSGTEIS53426.2021.9650405 [retrieved on 2021-12-13] * page 1 - page 3 * | 1-8 | **TECHNICAL FIELDS SEARCHED (IPC)** G06N G05B |
|  | ----- |  |  |
|  | -/-- |  |  |

The present search report has been drawn up for all claims

| Place of search | Date of completion of the search | Examiner |
|---|---|---|
| The Hague | 3 April 2025 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

**EUROPEAN SEARCH REPORT**

Europäisches
Patentamt
European
Patent Office
Office européen
des brevets

| | Application Number |
|---|---|
| | EP 24 30 6901 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TOH A K P ET AL: "A flux estimator for field oriented control of an induction motor using an artificial neural network", INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE, NEW YORK, NY, USA, 2 October 1994 (1994-10-02), pages 585-592, XP010124060, DOI: 10.1109/IAS.1994.345461 ISBN: 978-0-7803-1993-6 * abstract * ----- | 1-8 | |
| | | | **TECHNICAL FIELDS SEARCHED (IPC)** |

The present search report has been drawn up for all claims

| Place of search | Date of completion of the search | Examiner |
|---|---|---|
| The Hague | 3 April 2025 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6901

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2025

| Patent document cited in search report | Publication date | Patent family member(s) | Publication date |
|---|---|---|---|
| EP 4443258 A1 | 09-10-2024 | NONE | |

EPO FORM P0459

For more details about this annex : see Official Journal of the European Patent Office, No. 12/82